# EUROPÄISCHE PATENTSCHRIFT

(11) **EP 2 583 865 B1**
(45) Veröffentlichungstag und Bekanntmachung des Hinweises auf die Patenterteilung: **19.08.2015**
(21) Anmeldenummer: 12187928.2
(22) Anmeldetag: 10.10.2012
(51) Int. Cl.: B60R 13/02

(54) **Stecksystem für den Innenausbau eines Fahrzeugs**
Plug-in system for interior work of a vehicle
Dispositif enfichable pour les travaux de finition intérieure d'un véhicule automobile

(30) Priorität: 17.10.2011 DE 202011051642 U
(43) Veröffentlichungstag der Anmeldung: 24.04.2013
(73) Patentinhaber: Lakowa Gesellschaft für Kunststoffbe- und -verarbeitung mbH, 02681 Wilthen (DE)
(72) Erfinder: Saring, Matthias, 02681 Schirgiswalde-Kirschau (DE)
(74) Vertreter: Sperling, Thomas

(56) Entgegenhaltungen:
- DE-A1-102008 060 678
- FR-A1- 2 884 566

## Beschreibung

Die Erfindung betrifft ein Stecksystem für den Innenausbau eines Fahrzeugs, insbesondere für Krankenwagen und andere Spezialfahrzeuge.

Der Innenausbau von Spezialfahrzeugen, insbesondere von Krankenwagen, besteht allgemein aus einer Dachplatte und mehreren Seitenwandverkleidungsbauteilen. Die Seitenwandverkleidungsbauteile sind an den Dachplatten gemäß dem Stand der Technik meist durch Schrauben oder Nieten befestigt; in diesen Fällen sind zumeist auch besondere Maßnahmen zur Abdichtung notwendig. Dies erfordert eine aufwendige Positionierung der Verkleidungsbauteile bei der Montage.

So beschreibt die DE 29 81 9674 U1 eine Innenverkleidung für den Fahrzeugausbau, die aus Verbundplatten besteht. In solchen Verbundplatten sind Winkel eingeformt, indem an der dem Innenraum abgewandten Seite entlang einer vorgesehenen Biegelinie zur Durchtrennung der dortigen Aluminiumaußenschicht mit nachfolgender Biegung eine nutartige Vertiefung eingearbeitet ist. Der Grundausbau eines Fahrzeugs besteht dabei aus einer Deckenplatte und zwei Seitenplatten, wobei die Seitenplatten zur Gestaltung der oberen Ecken des Wagenkastens durch Ausbildung von zwei Winkeln von einer im Wesentlichen vertikalen in eine horizontale Richtung übergehen und jeweils durch eine doppel-U-förmige Schiene mit der Deckenplatte verbunden und befestigt sind. Der Nachteil dieser Anordnung besteht in der Notwendigkeit der Befestigung von Verbindungsschienen als zusätzliche Verbindungselemente, die an bestimmten Stellen im Fahrzeug angebracht und ausgerichtet werden müssen und die Montage der Innenverkleidung dadurch kompliziert gestalten.

Die Aufgabe der Erfindung besteht darin, ein Stecksystem bereitzustellen, das die Notwendigkeit von Schraubverbindungen und zusätzlichen Maßnahmen zur Abdichtung zwischen der Dachplatte und den Seitenwandverkleidungen vermeidet. Mit dem Stecksystem sollen Zurichtarbeiten und Montagezeiten erheblich verringert werden können.

Die Aufgabe der Erfindung wird durch ein Stecksystem für den Innenausbau eines Fahrzeugs gelöst, umfassend
- eine Dachplatte mit einem Querrand und einem Längsrand sowie einem den Querrand und den Längsrand verbindenden Eckrandbereich, wobei am Längsrand der Dachplatte ein Versatzrand ausgebildet ist, der einen nach innen versetzten Längsrandabschnitt, der zwischen dem Versatzrand bis zum Eckrandbereich ausgebildet ist, und einen nach außen versetzten Längsrandabschnitt miteinander verbindet, und wobei ein erster Führungsschenkel, der auf dem nach innen versetzten Längsrandabschnitt beginnt und mit einer ersten, nach unten gerichteten Aufnahmerinne entlang des Eckrandbereichs und des angrenzenden Querrands der Dachplatte verläuft, und ein zweiter Führungsschenkel, der über dem nach außen versetzten Längsrandabschnitt platziert ist und mit einer zweiten, nach unten gerichteten Aufnahmerinne entlang des nach außen versetzten Längsrandabschnittes verläuft, jeweils auf der Dachplatte befestigt sind,
- ein Vorder- oder Rückseitenverkleidungsbauteil, das derart geformt ist, dass ein oberer Randabschnitt des Vorder- oder Rückseitenverkleidungsbauteils von der ersten Aufnahmerinne aufgenommen werden kann und dabei seitlich an den Dachplattenrändern sowie an dem Versatzrand anliegt,
- eine Klemmplatte, die mit einem oberen Randabschnitt zu einem Teil in der zweiten Aufnahmerinne des zweiten Führungsschenkels eingeführt und zu einem weiteren Teil an der Außenwand des ersten Führungsschenkels entlanggeführt werden kann und dabei am nach außen versetzten Längsrandabschnitt der Dachplatte sowie an der Außenwand des ersten Führungsschenkels jeweils unter Spannung anliegt.

Durch das erfindungsgemäße Stecksystem für den Innenausbau eines Fahrzeugs wird eine verbesserte Passgenauigkeit sowie eine Kombination von Kraft- und Formschluss zwischen der Dachplatte und den Seitenwandverkleidungsbauteilen erreicht. Des Weiteren werden Zurichtarbeiten und Montagezeiten erheblich reduziert. Mit der Spannung, die durch das Einführen der Klemmplatte erzeugt wird, erfolgt auch eine Dichtung an den Verbindungsstellen zwischen der Dachplatte und den Seitenwandverkleidungsbauteilen. So liegt die Klemmplatte im Bereich des nach innen versetzten Längsrandabschnitts am Vorder- oder Rückseitenverkleidungsbauteil an und sorgt für ein Andrücken des oberen Randbereichs an den Längsrand. Vorzugsweise sind die Führungsschenkel in Längsrichtung voneinander beabstandet, so dass ein Abschnitt des nach innen versetzten Längsrandabschnitts nicht vom ersten Führungsschenkel bedeckt ist.

In einer besonders bevorzugten Ausführungsform der Erfindung sind die Führungsschenkel jeweils mit einem flachen Kontaktabschnitt, vorzugsweise über eine Klebeverbindung, auf der Dachplatte befestigt. An den flachen Kontaktabschnitt grenzt ein vertikal schräg orientierter Abschnitt an, der sich von der Oberseite der Dachplatte erhebt und in einem waagerecht orientierten Rinnenbasisabschnitt endet. Dieser Rinnenbasisabschnitt verläuft über den jeweiligen Dachplattenrand hinaus und geht in eine schräg oder senkrecht zur Dachplatte ausgerichtete, zum Dachplattenrand beabstandete und bis unterhalb der Ebene der Dachplatte verlaufende Schenkelwandung über. Letzteres erfolgt jeweils unter Ausbildung der nach unten gerichteten Aufnahmerinne mit einem schmalen Rinneneingang zwischen dem Dachplattenrand und der Schenkelwandung sowie mit einem Aufnahmeraum oberhalb der Dachplatte zwischen der Dachplatte und dem Rinnenbasisabschnitt einerseits sowie zwischen dem vertikal schräg orientierten Abschnitt und der Schenkelwandung andererseits. Vorzugsweise ist die Schenkelwandung in einem unteren Abschnitt, der sich bevorzugt unterhalb der Ebene der Dachplatte befindet, vertikal schräg nach außen abgeknickt. Dies erleichtert den Einbau der verschiedenen Seitenwandverkleidungsbauteile in die Aufnahmerinne und verstärkt den Druck der Außenwand des ersten Führungsschenkels gegen die Klemmplatte.

In einer weiteren bevorzugten Ausgestaltung des erfindungsgemäßen Stecksystems weist das Vorder- oder Rückseitenverkleidungsbauteil in dem Bereich, in welchem es den Versatzrand und den nach innen versetzten Längsrandabschnitt der Dachplatte kontaktiert, im Querschnitt im Wesentlichen das gleiche Profil auf wie die auf dem Vorder- oder Rückseitenverkleidungsbauteil in diesem Bereich aufliegende Klemmplatte.

Weitere Einzelheiten, Merkmale und Vorteile der Erfindung ergeben sich aus der nachfolgenden Beschreibung von Ausführungsbeispielen mit Bezugnahme auf die zugehörigen Zeichnungen. Es zeigen:
- **Fig. 1:**: eine Draufsicht auf einen Ausschnitt einer Dachplatte eines erfindungsgemäßen Stecksystems;
- **Fig. 2:**: einen Querschnitt der Dachplatte mit einem der Führungsschenkel;
- **Fig. 3:**: einen Querschnitt der Dachplatte mit einem Vorder- oder Rückseitenverkleidungsbauteil;
- **Fig. 4:**: eine perspektivische Draufsicht auf die Rückseite des Vorder- oder Rückseitenverkleidungsbauteils und
- **Fig. 5:**: ein erfindungsgemäßes Stecksystem für den Innenausbau eines Fahrzeugs.

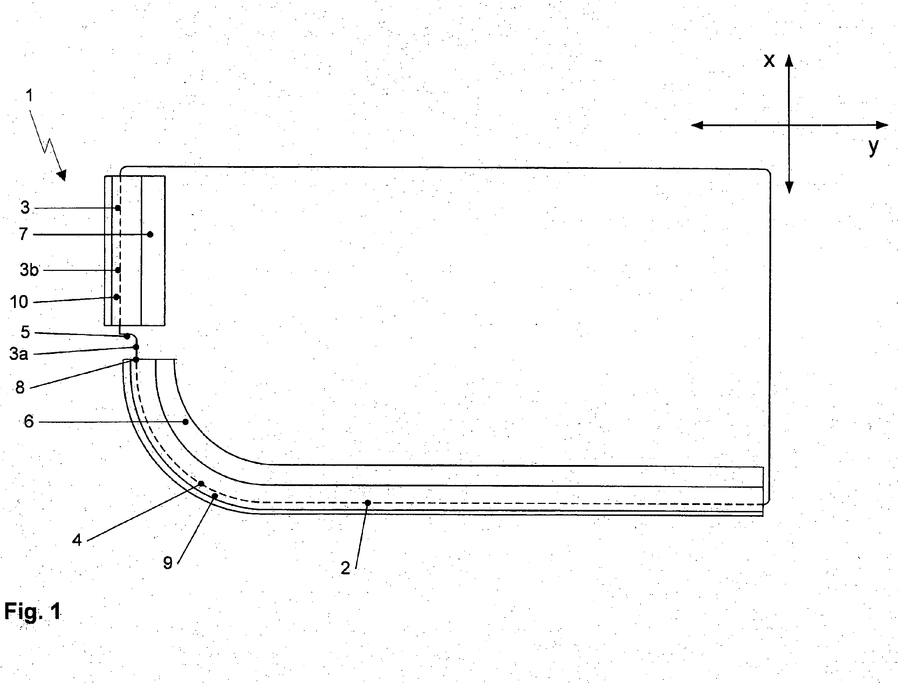

Die **Fig. 1** zeigt einen Ausschnitt einer Dachplatte 1 eines Stecksystems für den Innenausbau eines Fahrzeugs in der Draufsicht. Die Dachplatte 1 ist ein wesentlicher Bestandteil des Stecksystems und weist - in dem gezeigten Ausschnitt in **Fig. 1** sichtbar - einen Querrand 2 (in Querrichtung y) und einen Längsrand 3 (in Längsrichtung x) auf, wobei beide Dachplattenränder 2, 3 in der Draufsicht nach **Fig. 1** größtenteils verdeckt sind und deren Lage daher mit gestrichelten Linien gekennzeichnet ist. Den Querrand 2 und den Längsrand 3 verbindet ein gekrümmter Eckrandbereich 4. Am Längsrand 3 ist ein Versatzrand 5 ausgebildet. Dieser verbindet einen nach innen versetzten Längsrandabschnitt 3a, der zwischen dem Versatzrand 5 bis zum gekrümmten Eckrandbereich 4 ausgebildet ist, und einen nach außen versetzten Längsrandabschnitt 3b miteinander. Dabei ist der Übergang vom nach innen versetzten Längsrandabschnitt 3a zum Versatzrand 5 konkav abgerundet. Zum Stecksystem gehört auch ein auf der Dachplatte 1 befestigter erster Führungsschenkel 6 und ein ebenso auf der Dachplatte 1 befestigter zweiter Führungsschenkel 7.

Der erste Führungsschenkel 6 beginnt mit einem Führungsschenkelanfang 8 auf dem nach innen versetzten Längsrandabschnitt 3a und verläuft entlang des gekrümmten Eckrandbereichs 4 und des angrenzenden geraden Querrands 2 der Dachplatte 1. Dabei ist an der (nicht dargestellten) Unterseite des ersten Führungsschenkels 6 eine nach unten gerichtete, über die Dachplattenränder am Querrand 2, im Eckrandbereich 4 und am nach innen versetzten Längsrandabschnitt 3a hinaus ragende erste Aufnahmerinne 9 vorgesehen, die vom Führungsschenkelanfang 8 beginnend, entlang am gekrümmten Eckrandbereich 4 und am Querrand 2 verläuft.

Darüber hinaus bildet der über den nach außen versetzten Längsrandabschnitt 3b platzierte zweite Führungsschenkel 7 eine nach unten gerichtete, über den nach außen versetzten Längsrandabschnitt 3b hinausragende und entlang dieses Längsabschnitts 3b verlaufende zweite Aufnahmerinne 10. Infolge der Versetzung der Führungsschenkel 6, 7 sind auch die Aufnahmerinne 9 des ersten Führungsschenkels 6 und die Aufnahmerinne 10 des zweiten Führungsschenkels 7 gegeneinander versetzt. Die Führungsschenkel 6, 7 sind vorzugsweise auch in Längsrichtung x voneinander beabstandet, so dass ein Abschnitt des nach innen versetzten Längsrandabschnitts 3a frei, das heißt, nicht vom ersten Führungsschenkel 6 bedeckt ist.

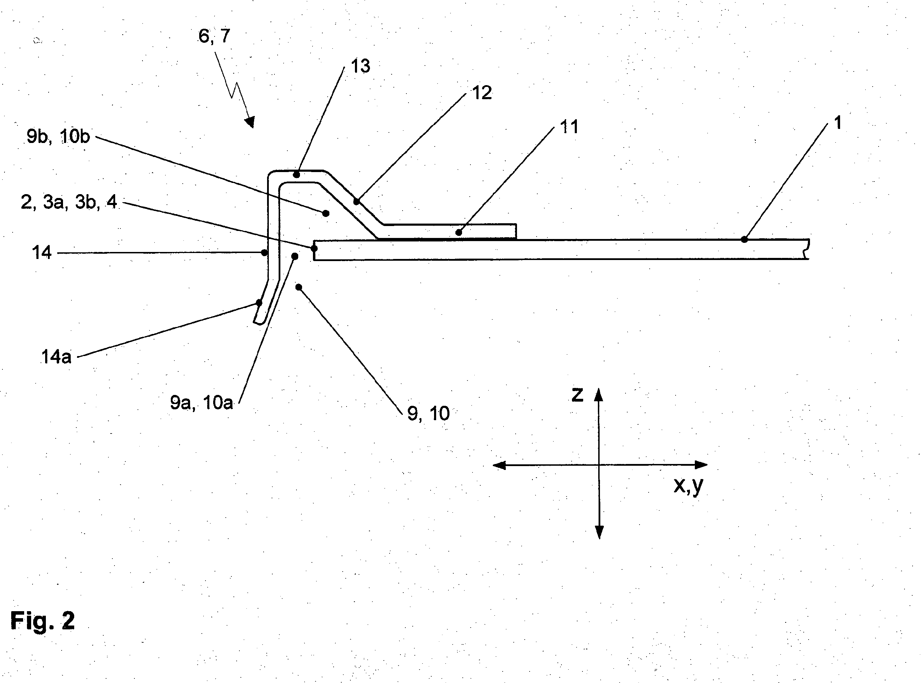

Die **Fig. 2** zeigt einen Querschnitt der Dachplatte 1 mit einem der Führungsschenkel 6, 7. Der jeweilige Führungsschenkel 6, 7 ist, wie die Fig. 2 zeigt, jeweils mit einem flachen Kontaktabschnitt 11 auf der Oberseite der Dachplatte 1 befestigt, vorzugsweise durch eine Klebeverbindung. An den flachen Kontaktabschnitt 11 grenzt in der x;y-Ebene (Querrichtung y und Längsrichtung x) in Richtung Dachplattenrand (Querrand 2, Eckrandbereich 4 oder der nach innen versetzte Längsrandabschnitt 3a) noch vor dem jeweiligen Dachplattenrand ein vertikal schräg orientierter Abschnitt 12 an (das heißt schräg zur z-Richtung in Richtung Dachplattenrand), der sich von der Oberseite der Dachplatte 1 nach oben erhebt und oberhalb des jeweiligen Dachplattenrandes in einem abgerundeten Übergang zu einem im Wesentlichen waagerecht orientierten Rinnenbasisabschnitt 13 endet. Der jeweilige Dachplattenrand ist im Falle des ersten Führungsschenkels 6 der Querrand 2, der Eckrandbereich 4 sowie der nach innen versetzte Längsrandabschnitt 3a und im Falle des zweiten Führungsschenkels 7 der nach außen versetzte Längsrandabschnitt 3b. Der Rinnenbasisabschnitt 13 verläuft über den jeweiligen Dachplattenrand, das heißt jeweils über den Querrand 2, den Eckrandbereich 4 und den nach innen versetzten Längsrandabschnitt 3a beziehungsweise den nach außen versetzten Längsrandabschnitt 3b hinaus und endet dann in einem abgerundeten Übergang zu einer senkrecht zur Dachplatte 1 ausgerichteten, zum jeweiligen Dachplattenrand beabstandeten und bis unterhalb der Ebene der Dachplatte 1 verlaufenden Schenkelwandung 14. Auf diese Weise wird die nach unten gerichtete Aufnahmerinne 9, 10 zwischen dem jeweiligen Dachplattenrand, dem vertikal schräg orientierten Abschnitt 12, dem Rinnenbasisabschnitt 13 und der Schenkelwandung 14 ausgebildet. Dabei weist die nach unten gerichtete Aufnahmerinne 9, 10 einen schmalen Rinneneingang 9a, 10a zwischen dem Dachplattenrand und der Schenkelwandung 14 sowie einen Aufnahmeraum 9b, 10b oberhalb der Dachplatte 1 zwischen der Dachplatte 1 und dem Rinnenbasisabschnitt 13 sowie zwischen dem vertikal schräg orientierten Abschnitt 12 und der Schenkelwandung 14 auf. Die zunächst senkrecht zur Dachplatte 1 orientierte Schenkelwandung 14 ist in ihrem unteren Abschnitt 14a gemäß dem Ausführungsbeispiel in **Fig. 2** vertikal schräg nach außen abgeknickt.

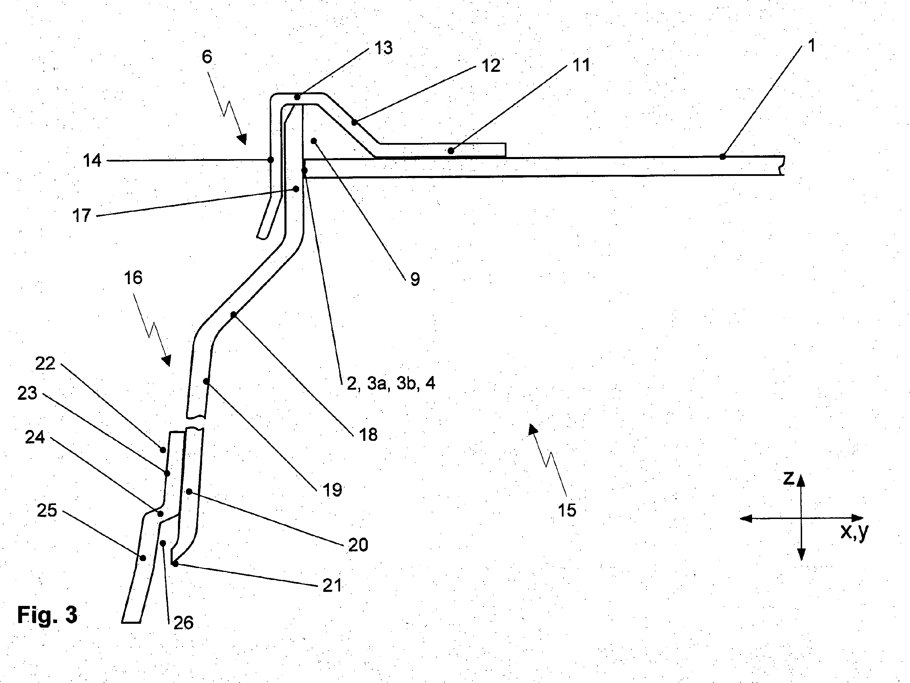

Die **Fig. 3** zeigt einen Querschnitt der Dachplatte 1 und des ersten Führungsschenkels 6 als Teil eines erfindungsgemäßen Stecksystems 15 mit einem Vorder- oder Rückseitenverkleidungsbauteil 16. Das Vorder- oder Rückseitenverkleidungsbauteil 16 ist derart geformt, dass ein oberer Randabschnitt 17 des Vorder- oder Rückseitenverkleidungsbauteils 16 von der ersten Aufnahmerinne 9 aufgenommen werden kann. Dabei liegt der obere Randabschnitt 17 des Vorder- oder Rückseitenverkleidungsbauteils 16 in einem zusammengefügten Stecksystem 15 seitlich an den Dachplattenrändern, das heißt, an dem Querrand 2, dem Eckrandbereich 4 und dem nach innen versetzter Längsrandabschnitt 3a, sowie an dem Versatzrand 5 (in Fig. 3 nicht dargestellt) der Dachplatte 1 an.

Der obere Randabschnitt 17 ist im Querschnitt planar ausgebildet und im zusammengesetzten Stecksystem 15 senkrecht zur Dachplatte 1 ausgerichtet. Der obere Randabschnitt 17 grenzt in vertikaler Richtung (in z-Richtung) nach unten an einen nach außen gewölbten Schulterbereich 18 an. Dieser geht wiederum nach unten hin über in eine vertikal leicht schräg nach außen ausgerichtete Vorder- oder Rückwand 19, die in **Fig. 3** in Form eines unterbrochenen Querschnitts dargestellt ist.

Die Vorder- oder Rückwand 19 weist einen unteren Randbereich 20 mit einem unteren Rand 21 auf. Auf die äußere Fläche der Vorder- oder Rückwand 19 ist im unteren Randbereich 20 ein unterer Führungsschenkel 22 befestigt. Dieser untere Führungsschenkel 22 besteht aus einem flachen Kontaktabschnitt 23, mit dem er auf dem unteren Randbereich 20 der Vorder- oder Rückwand 19 aufgebracht ist, vorzugsweise durch eine Klebeverbindung. Dabei endet der flache Kontaktabschnitt 23 noch oberhalb des unteren Randes 21, indem sich der untere Führungsschenkel 22 unter Ausbildung eines Rinnenbasisabschnitts 24 senkrecht vom unteren Randbereich 20 abhebt, wobei der Rinnenbasisabschnitt 24 wiederum in eine zunächst senkrecht nach unten ausgerichtete Schenkelwandung 25 übergeht. Zwischen dem unteren Randbereich 20, dem Rinnenbasisabschnitt 24 und der Schenkelwandung 25 ist eine nach unten gerichtete Aufnahmerinne 26 für weitere im Stecksystem 15 integrierte Innenverkleidungsbauteile ausgebildet. Die Schenkelwandung 25 ragt gemäß der Darstellung in **Fig. 3** über den unteren Rand 21 hinaus. Dabei ist die Vorder- oder Rückwand 19 am unteren Rand 21 leicht nach außen, das heißt, ins Innere der Aufnahmerinne 26, abgebogen. In der Höhe unterhalb des unteren Randes 21 ist die Schenkelwandung 25 mit einem flachen Winkel schräg nach außen abgekantet.

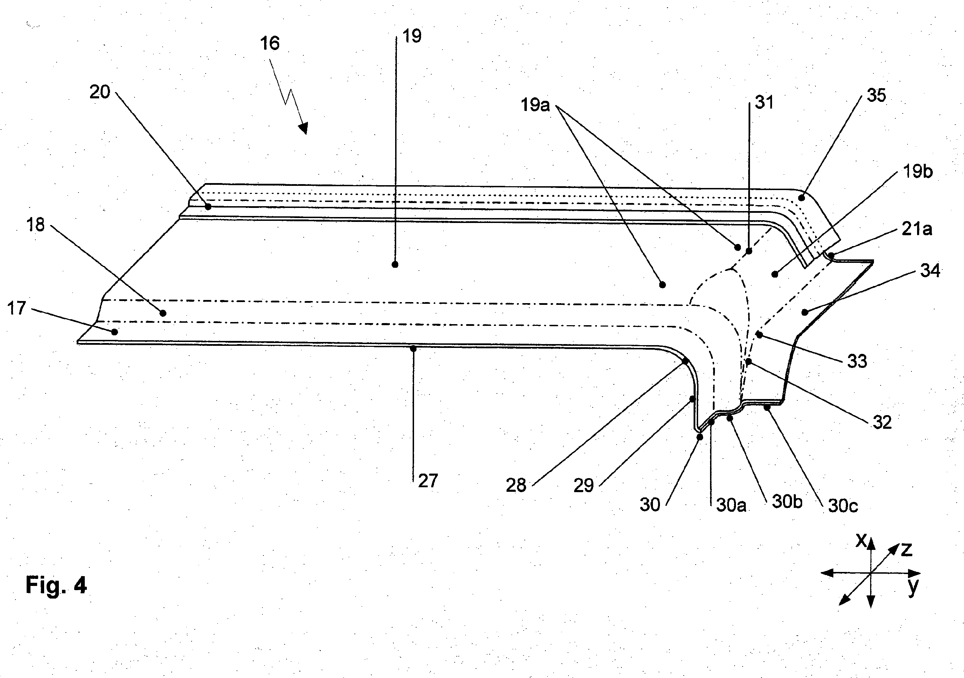

Die **Fig. 4** zeigt eine perspektivische Draufsicht auf die Rückseite des Vorder- oder Rückseitenverkleidungsbauteils 16. Dabei verlaufen der obere Randabschnitt 17 und der gewölbte Schulterbereich 18 des Vorder- oder Rückseitenverkleidungsbauteils 16 äquidistant zunächst in einem Querabschnitt 27 linear in Querrichtung y und vollziehen über einen gebogenen Eckbereich 28 einen Wechsel in Längsrichtung x, wo der obere Randabschnitt 17 und der gewölbte Schulterbereich 18 nach einem vergleichsweise kurzen Längsabschnitt 29 mit einem nach außen abgekanteten oberen Endabschnitt 30 abschließen.

Der Radius der Rundung der Vorder- oder Rückwand 19 im gebogenen Eckbereich 28 ist an der Grenze zum gewölbten Schulterbereich 18 äquidistant zum oberen Randabschnitt 17 und zum gewölbten Schulterbereich 18 ausgebildet. Nach unten hin nimmt der Radius der Rundung auf der Vorder- oder Rückwand 19 bis zum Erreichen einer abgerundeten vertikalen Kante 31 stetig ab, wobei diese abgerundete vertikale Kante 31 einen konstanten Radius aufweist. Dadurch reicht einerseits die in Querrichtung y orientierte planare Fläche 19a der Vorder- oder Rückwand 19 weiter in den gebogenen Eckbereich 28 hinein und andererseits geht die Rundung im unteren Bereich ab der abgerundeten vertikalen Kante 31 in eine zur planaren Fläche 19a in einem flachen Winkel ausgerichtete planare Eckwand 19b über.

Das Vorder- oder Rückseitenverkleidungsbauteil 16 weist einen in Längsrichtung x weisenden unteren Endabschnitt 32 mit einer bogenförmigen Ausnehmung 33 auf, die unterhalb des Schulterbereichs 18 beginnt und zunächst konvex gekrümmt und im weiteren Verlauf senkrecht oder schräg linear bis zum unteren Rand 21 a der planaren Eckwand 19b verläuft, wobei die bogenförmige Ausnehmung 33 umrahmt ist von einem im Querschnitt in gleicher Weise bogenförmigen, nach außen abgekanteten Seitenrand 34.

Der nach außen abgekantete obere Endabschnitt 30 umfasst neben der vorderen Randfläche 30a des oberen Randabschnitts 17 und der vorderen Randfläche 30b des gewölbten Schulterbereichs 18 auch die durch eine Abkantung in z-Richtung nach oben orientierte vordere Randfläche 30c des nach außen abgekanteten Seitenrandes 34. Auf diese Weise entspricht das Profil des nach außen abgekanteten oberen Endabschnitts 30 mit den drei vorderen Randflächen 30a, 30b, 30c dem Profil des Querschnitts des Vorder- oder Rückseitenverkleidungsbauteils 16 im oberen Endabschnitt 30 und dem benachbarten, in Längsrichtung x orientierten Bereich des Vorder- oder Rückseitenverkleidungsbauteils 16. Dieses Profil wird aus dem senkrechten oberen Randabschnitt 17, dem gewölbten Schulterbereich 18 und dem waagerecht orientierten vorderen Teil des Seitenrandes 34 gebildet. Der untere Führungsschenkel 22 erstreckt sich gemäß **Fig. 4** in Querrichtung y linear über die gesamt Vorder- oder Rückwand 19 und weist beim Übergang zur planaren Eckwand 19b im Bereich der abgerundeten vertikalen Kante 31 vorübergehend einen bogenförmigen Bereich 35 auf, wobei der untere Führungsschenkel 22 auf der planaren Eckwand 19b wieder eine lineare Form annimmt und noch vor dem Übergang zum Seitenrand 34 endet.

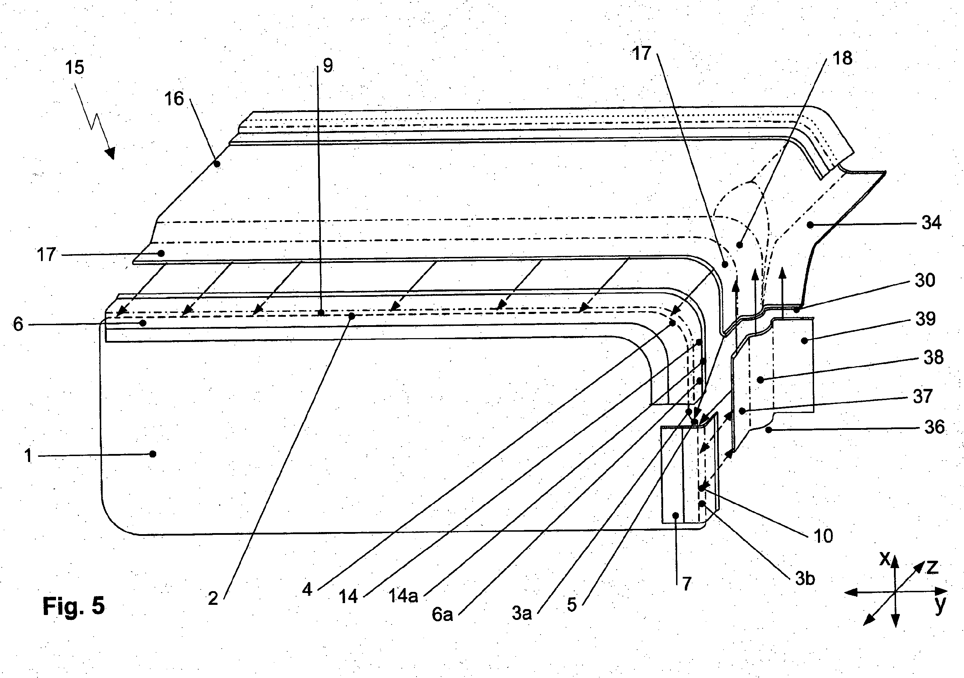

In **Fig. 5** ist ein erfindungsgemäßes Stecksystem 15 für den Innenausbau eines Fahrzeugs mit mehreren Verkleidungsteilen schematisch dargestellt. Das Stecksystem 15 umfasst gemäß **Fig. 5** neben der Dachplatte 1 mit den Führungsschenkeln 6, 7 das Vorder- oder Rückseitenverkleidungsbauteil 16, das derart geformt ist, dass der obere Randabschnitt 17 des Vorder- oder Rückseitenverkleidungsbauteils 16, wie durch die Pfeile angedeutet wird, von der ersten Aufnahmerinne 9 an der Unterseite des ersten Führungsschenkels 6 aufgenommen werden kann. Dabei liegt der obere Randabschnitt 17 am Querrand 2, am Eckrandbereich 4, am nach innen versetzten Längsrandabschnitts 3a und am Versatzrand 5 der Dachplatte 1 an.

Des Weiteren weist das Stecksystem 15 gemäß **Fig. 5** eine Klemmplatte 36 auf. Diese Klemmplatte 36 wird mit einem oberen Randabschnitt 37 zu einem Teil in die zweite Aufnahmerinne 10 des zweiten Führungsschenkels 7 eingeführt und liegt dort am nach außen versetzten Längsrandabschnitt 3b der Dachplatte 1 an. Gleichzeitig liegt ein weiterer Teil der Klemmplatte 36 mit dem oberen Randabschnitt 37 am nach außen abgekanteten oberen Endabschnitt 30 des in die erste Aufnahmerinne 9 des ersten Führungsschenkels 6 eingeführten Vorder- oder Rückseitenverkleidungsbauteils 16 und im weiteren Verlauf auf der Außenwand der Schenkelwandung 14 des ersten Führungsschenkels 6 an. Durch das Andrücken des oberen Randabschnitts 37 der Klemmplatte 36 an den nach außen versetzten Längsrandabschnitt 3b der Dachplatte 1 innerhalb der Aufnahmerinne 10 einerseits und durch den Gegendruck andererseits, den die äußere Schenkelwandung 14 als Außenwand 6a des Führungsschenkels 6, insbesondere mit dem vertikal schräg nach außen abgeknickten unteren Abschnitt 14a, bewirkt, wird eine Spannung erzeugt, die zu einer Dichtung der Verbindungsstellen an den Dachplattenrändern führt.

Das Querschnittsprofil der Klemmplatte 36 korrespondiert mit dem Profil des nach außen abgekanteten oberen Endabschnitts 30. Es weist neben dem senkrecht orientierten oberen Randabschnitt 37, der mit dem Profil des oberen Randabschnitts 17 des Vorder- oder Rückseitenverkleidungsbauteils 16 korrespondiert, einen gewölbten Schulterbereich 38, der mit dem gewölbten Schulterbereich 18 des Vorder- oder Rückseitenverkleidungsbauteils 16 korrespondiert, sowie einen waagerechten Stützbereich 39, der mit dem Seitenrand 34 des Vorder- oder Rückseitenverkleidungsbauteils 16 korrespondiert, auf.

### LISTE DER BEZUGSZEICHEN

- x: Längsrichtung
- y: Querrichtung
- z: vertikale Richtung
- 1: Dachplatte
- 2: Querrand
- 3: Längsrand
- 3a: nach innen versetzter Längsrandabschnitt
- 3b: nach außen versetzter Längsrandabschnitt
- 4: Eckrandbereich
- 5: Versatzrand
- 6: erster Führungsschenkel
- 6a: Außenwand des ersten Führungsschenkels 6
- 7: zweiter Führungsschenkel
- 8: Führungsschenkelanfang
- 9: Aufnahmerinne (des ersten Führungsschenkels 6)
- 9a: Rinneneingang
- 9b: Aufnahmeraum oberhalb der Dachplatte 1
- 10: Aufnahmerinne (des zweiten Führungsschenkels 7)
- 10a: Rinneneingang
- 10b: Aufnahmeraum oberhalb der Dachplatte 1
- 11: flacher Kontaktabschnitt (des Führungsschenkels 6, 7)
- 12: vertikal schräg orientierter Abschnitt (des Führungsschenkels 6, 7)
- 13: Rinnenbasisabschnitt
- 14: Schenkelwandung
- 14a: unterer Abschnitt (der Schenkelwandung 14)
- 15: Stecksystem
- 16: Vorder- oder Rückseitenverkleidungsbauteil
- 17: oberer Randabschnitt
- 18: gewölbter Schulterbereich (des Vorder- oder Rückseitenverkleidungsbauteils 16)
- 19: Vorder- oder Rückwand 19a planare Fläche
- 19b: planare Eckwand
- 20: unterer Randbereich
- 21: unterer Rand (der Vorder- oder Rückwand 19)
- 21a: unterer Rand (der planaren Eckwand 19b)
- 22: unterer Führungsschenkel
- 23: flacher Kontaktabschnitt (des unteren Führungsschenkels 22)
- 24: Rinnenbasisabschnitt (des unteren Führungsschenkels 22)
- 25: Schenkelwandung (des unteren Führungsschenkels 22)
- 26: Aufnahmerinne (des unteren Führungsschenkels 22)
- 27: Querabschnitt (des Vorder- oder Rückseitenverkleidungsbauteils 16)
- 28: gebogener Eckbereich (des Vorder- oder Rückseitenverkleidungsbauteils 16)
- 29: Längsabschnitt (des Vorder- oder Rückseitenverkleidungsbauteils 16)
- 30: oberer Endabschnitt (des Vorder- oder Rückseitenverkleidungsbauteils 16 in Längsrichtung x)
- 30a: vordere Randfläche (des oberen Randabschnitts 17)
- 30b: vordere Randfläche (des gewölbten Schulterbereichs 18)
- 30c: vordere Randfläche (des nach außen abgekanteten Seitenrandes 34)
- 31: abgerundete vertikale Kante (des Vorder- oder Rückseitenverkleidungsbauteils 16)
- 32: unterer Endabschnitt (des Vorder- oder Rückseitenverkleidungsbauteils 16 in Längsrichtung x)
- 33: bogenförmige Ausnehmung (am unteren Endabschnitt 32)
- 34: Seitenrand
- 35: bogenförmiger Bereich (des unteren Führungsschenkels 22)
- 36: Klemmplatte
- 37: oberer Randabschnitt (der Klemmplatte 36)
- 38: gewölbter Schulterbereich (der Klemmplatte 36)
- 39: waagerechter Stützbereich (der Klemmplatte 36)

## Patentansprüche

1. Stecksystem (15) für den Innenausbau eines Fahrzeugs, umfassend
• eine Dachplatte (1) mit einem Querrand (2) und einem Längsrand (3) sowie einem den Querrand (2) und den Längsrand (3) verbindenden Eckrandbereich (4), wobei am Längsrand (3) ein Versatzrand (5) ausgebildet ist, der einen nach innen versetzten Längsrandabschnitt (3a), der zwischen dem Versatzrand (5) bis zum Eckrandbereich (4) ausgebildet ist, und einen nach außen versetzten Längsrandabschnitt (3b) miteinander verbindet, und wobei ein erster Führungsschenkel (6), der auf dem nach innen versetzten Längsrandabschnitt (3a) beginnt und mit einer ersten, nach unten gerichteten Aufnahmerinne (9) entlang des Eckrandbereichs (4) und des angrenzenden Querrands (2) der Dachplatte (1) verläuft, und ein zweiter Führungsschenkel (7), der über dem Längsrandabschnitt (3b) platziert ist und mit einer zweiten, nach unten gerichteten Aufnahmerinne (10) entlang des Längsrandabschnittes (3b) verläuft, jeweils auf der Dachplatte (1) befestigt sind,
• ein Vorder- oder Rückseitenverkleidungsbauteil (16), das derart geformt ist, dass ein oberer Randabschnitt (17) des Vorder- oder Rückseitenverkleidungsbauteils (16) von der ersten Aufnahmerinne (9) aufgenommen werden kann und dabei seitlich an den Dachplattenrändern sowie an dem Versatzrand (5) anliegt,
• eine Klemmplatte (36), die mit einem oberen Randabschnitt (37) zu einem Teil in der zweiten Aufnahmerinne (10) des zweiten Führungsschenkels (7) eingeführt und zu einem weiteren Teil an der Außenwand des ersten Führungsschenkels (6) entlanggeführt werden kann und dabei am Längsrandabschnitt (3b) der Dachplatte (1) sowie an der Außenwand (6a) des Führungsschenkels (6) jeweils unter Spannung anliegt.

2. Stecksystem (15) nach Anspruch 1, **dadurch gekennzeichnet, dass** die Führungsschenkel (6, 7) in Längsrichtung (x) voneinander beabstandet sind, so dass ein Abschnitt des nach innen versetzten Längsrandabschnitts (3a) nicht vom ersten Führungsschenkel (6) bedeckt ist.

3. Stecksystem (15) nach Anspruch 1 oder 2, **dadurch gekennzeichnet, dass** die Führungsschenkel (6, 7) jeweils mit einem flachen Kontaktabschnitt (11) befestigt sind und angrenzend an den flachen Kontaktabschnitt (11) einen vertikal schräg orientierten Abschnitt (12) aufweisen, der sich von der Oberseite der Dachplatte (1) erhebt und in einem waagerecht orientierten Rinnenbasisabschnitt (13) endet, welcher über den Dachplattenrand hinaus verläuft und in eine schräg oder senkrecht zur Dachplatte (1) ausgerichtete, zum Dachplattenrand beabstandete und bis unterhalb der Ebene der Dachplatte (1) verlaufende Schenkelwandung (14) übergeht, jeweils unter Ausbildung der nach unten gerichteten Aufnahmerinne (9, 10) mit einem schmalen Rinneneingang (9a, 10a) zwischen dem Dachplattenrand und der Schenkelwandung (14) sowie mit einem Aufnahmeraum (9b, 10b) oberhalb der Dachplatte (1) zwischen der Dachplatte (1) und dem Rinnenbasisabschnitt (13) sowie zwischen dem vertikal schräg orientierten Abschnitt (12) und der Schenkelwandung (14).

4. Stecksystem nach Anspruch 3, **dadurch gekennzeichnet, dass** die Befestigung des flachen Kontaktabschnittes (11) über eine Klebeverbindung erfolgt.

5. Stecksystem nach Anspruch 3 oder 4, **dadurch gekennzeichnet, dass** die Schenkelwandung (14) in einem unteren Abschnitt (14a) vertikal schräg nach außen abgeknickt ist.

6. Stecksystem nach einem der Ansprüche 1 bis 5, **dadurch gekennzeichnet, dass** das Vorder- oder Rückseitenverkleidungsbauteil (16) in dem Bereich, in welchem es den Versatzrand (5) und den nach innen versetzten Längsrandabschnitt (3a) der Dachplatte (1) kontaktiert, im Querschnitt das gleiche Profil aufweist wie die auf dem Vorder- oder Rückseitenverkleidungsbauteil (16) in diesem Bereich aufliegende Klemmplatte (36).

## Claims

1. Plug-in system (15) for interior outfitting of a vehicle, comprising:
- a top plate (1) with a transversal edge (2) and a longitudinal edge (3) as well as a corner edge region (4) connecting the transversal edge (2) with the longitudinal edge (3), wherein an offset edge (5) is formed at the longitudinal edge (3) and connects an inwardly offset longitudinal edge section (3a), which is formed between the offset edge (5) up to the corner edge region (4), with an outwardly offset longitudinal edge section (3b), and wherein a first guide leg (6), which starts from the inwardly offset longitudinal edge section (3a) and with a first downwardly directed accommodation groove (9) extends along the corner edge region (4) and the adjacent transversal edge (2) of the top plate (1), and a second guide leg (7), which is placed above the longitudinal edge section (3b) and with a second downwardly directed accommodation groove (10) extends along the longitudinal edge section (3b), are each attached to the top plate (1),
- a front side or rear side trim component (16), which is formed such that an upper edge section (17) of the front side or rear side trim component (16) can be received by the first accommodation groove (9) and thereby laterally rests against the top plate edges as well against the offset edge (5),
- a clamping plate (36) which, with an upper edge section (37), can be inserted towards a part in the second accommodation groove (10) of the second guide leg (7) and can be guided along to another part at the outer wall of the first guide leg (6), and thereby under tension rests against the longitudinal edge section (3b) of the top plate (1) as well as against the outer wall (6a) of the guide leg (6).

2. Plug-in system (15) according to claim 1, **characterized in that** the guide legs (6, 7) are spaced apart from each other in longitudinal direction (x), so that a part of the inwardly offset longitudinal edge section (3a) is not covered by the first guide leg (6).

3. Plug-in system (15) according to claim 1 or 2, **characterized in that** the guide legs (6, 7) are each attached to an even contact section (11) and, adjacent to the even contact section (11) have a section (12) which is oriented diagonally in vertical direction and which raises from the upper surface of the top plate (1) and terminates in a horizontally oriented groove base section (13) which extends beyond the top plate edge and merges with a leg wall (14) which is oriented diagonally or vertically with respect to the top plate (1) which is spaced apart from the top plate edge and which extends down to the plane of the top plate (1), thereby each forming a downwardly directed accommodation groove (9, 10) with a narrow groove opening (9a, 10a) between the top plate edge and the leg wall (14) as well as an accommodation space (9b, 10b) above the top plate (1) between the top plate (1) and the groove base section (13) as well as between the section (12) which is oriented diagonally in vertical direction and the leg wall (14).

4. Plug-in system according to claim 3, **characterized in that** the attachment of the even contact section (1) is realized via an adhesive connection.

5. Plug-in system according to claim 3 or 4, **characterized in that** the leg wall (14) in a lower section (14a) is kinked diagonally outwardly in vertical direction.

6. Plug-in system according to any of claims 1 to 5, **characterized in that** the front side or rear side trim component (16) has the same profile in cross-section as the clamping plate (36) resting on the front side or rear side trim component (16) in this region, in the region, where it contacts the offset edge (5) and the inwardly offset longitudinal edge section (3a) of the top plate (1).

## Revendications

1. Système enfichable (15) pour l'aménagement intérieur d'un véhicule, comprenant:
- une plaque supérieure (1) avec un bord transversal (2) et un bord longitudinal (3) ainsi qu'avec une zone de l'angle formant le bord (4) reliant le bord transversal (2) au bord longitudinal (3), dans lequel un bord décalé (5) est formé au niveau du bord longitudinal (3) et relie une section de bord longitudinal (3a) étant décalée vers l'intérieur, qui est formée entre le bord décalé (5) jusqu'à la zone de l'angle formant le bord (4), à une section de bord longitudinal (3b) étant décalée vers l'extérieur (3b), et dans lequel une première jambe de guidage (6), partant de la section de bord longitudinal (3a) étant décalée vers l'intérieur et avec une première rainure de logement (9) étant dirigée vers le bas s'étend le long de la zone de l'angle formant le bord (4) et le bord transversal (2) adjacent de la plaque supérieure (1), et une seconde jambe de guidage (7), qui est placée au-dessus de la section de bord longitudinal (3b) et avec une seconde rainure de logement (10) étant dirigée vers le bas s'étend le long de la section de bord longitudinal (3b), sont fixées chacune à la plaque supérieure (1),
- un composant de garniture (16) avant ou arrière, qui est formé de telle manière qu'une section de bord supérieure (17) du composant de garniture (16) avant ou arrière puisse être reçue par la première rainure de logement (9) en reposant latéralement contre les bords de la plaque supérieure ainsi que contre le bord décalé (5),
- une plaque de serrage (36) qui, avec une section de bord supérieure (37), peut être insérée vers une partie dans la seconde rainure de logement (10) de la seconde jambe de guidage (7) et peut être guidée vers une autre partie au niveau de la paroi extérieure du premier jambe de guidage (6), en reposant sous tension contre la section de bord longitudinal (3b) de la plaque supérieure (1) ainsi que contre la paroi extérieure (6a) de la jambe de guidage (6).

2. Système enfichable (15) selon la revendication 1, **caractérisé en ce que** les jambes de guidage (6, 7) sont espacées l'une de l'autre en direction longitudinal (x) de telle manière qu'une partie de la section de bord longitudinal (3a) étant décalée vers l'intérieur ne soit pas recouverte par la première jambe de guidage (6).

3. Système enfichable (15) selon les revendications 1 ou 2, **caractérisé en ce que** les jambes de guidage (6, 7) sont fixées chacune à une section de contact (11) plane et, adjacente à la section de contact (11) plane, ont une section (12) qui est orientée diagonalement en direction verticale et qui fait saillie de la surface supérieure de la plaque supérieure (1) et termine dans une section de base de rainure (13) étant orientée horizontalement qui s'étend au-delà du bord de la plaque supérieure et se confond avec une paroi de jambe (14) étant orientée diagonalement ou verticalement par rapport à la plaque supérieure (1) qui est espacée du bord de la plaque supérieure et qui s'étend vers le bas du plan de la plaque supérieure (1), en formant respectivement une rainure de logement (9, 10) étant dirigée vers le bas avec une ouverture de la rainure (9a, 10a) étroite entre le bord de la plaque supérieure et la paroi de jambe (14) ainsi qu'un espace de logement (9b, 10b) au-dessus de la plaque supérieure (1) entre la plaque supérieure (1) et la section de base de rainure (13) ainsi qu'entre la section (12) qui est orientée diagonalement in direction verticale, et la jambe de paroi (14).

4. Système enfichable selon la revendication 3, **caractérisé en ce que** la fixation de la section de contact (1) plane est réalisée via une connexion adhésive.

5. Système enfichable selon la revendication 3 ou 4, **caractérisé en ce que** la paroi de jambe (1), dans une section inférieure (14a), est pliée diagonalement vers l'extérieur en direction verticale.

6. Système enfichable selon la revendication 1 à 5, **caractérisé en ce que** le composant de garniture (16) avant ou arrière en section transversale présente le même profil que la plaque de serrage (36) reposant sur le composant de garniture (16) avant ou arrière dans cette région, dans la zone, dans laquelle celui-ci entre en contact avec le bord décalé (5) et la section de bord longitudinal (3a) étant décalée vers l'intérieur de la plaque supérieure (1) .
